# EUROPÄISCHE PATENTSCHRIFT

(11) **EP 0 791 256 B1**
(45) Veröffentlichungstag und Bekanntmachung des Hinweises auf die Patenterteilung: **27.01.1999**
(21) Anmeldenummer: 95937875.3
(22) Anmeldetag: 06.11.1995
(51) Int. Cl.: H04L 1/22, H04L 1/24, H04B 17/00, H04B 1/74, H04L 1/16

(54) **VERFAHREN ZUM SENDEN VON MELDUNGEN VON EINER UNTERGEORDNETEN STEUERUNG AN EINE ÜBERGEORDNETE STEUERUNG**
PROCESS FOR TRANSMITTING MESSAGES FROM A SECONDARY CONTROL SYSTEM TO A PRIMARY CONTROL SYSTEM
PROCEDE DE TRANSMISSION DE MESSAGES D'UN SYSTEME DE COMMANDE SECONDAIRE VERS UN SYSTEME DE COMMANDE PRIMAIRE

(30) Priorität: 11.11.1994 EP 94117878
(43) Veröffentlichungstag der Anmeldung: 27.08.1997
(73) Patentinhaber: SIEMENS AKTIENGESELLSCHAFT, 80333 München (DE)
(72) Erfinder: SCHWARZ, Leopold, A-2100 Korneuburg (AT)
(86) Internationale Anmeldenummer: EP9504369
(87) Internationale Veröffentlichungsnummer: WO9615602

(56) Entgegenhaltungen:
- EP-A- 0 033 228
- EP-A- 0 138 135
- EP-A- 0 145 318
- WO-A-85/03825
- US-A- 4 472 787

## Beschreibung

Der Erfindung liegt die Aufgabe zugrunde, für das Senden von (Fehler-)Meldungen von einer untergeordneten Steuerung an eine übergeordnete Steuerung eine vorhandene redundante physikalische Wegestruktur auszunützen, ohne dadurch die Bearbeitungskapazität der übergeordneten Steuerung durch redundante Fehlermeldungen unnötig zu belasten.

Treten in einem Vermittlungssystem an der Peripherie z.B. Portfehler auf, so müssen diese Ereignisse so schnell als möglich an eine übergeordnete Steuerung gemeldet werden, um Belegungsversuche zu solchen gestörten Teilnehmerports so früh als möglich zurückweisen zu können.

Bei einer vorhandenen redundanten physikalischen Wegestruktur setzen periphere Einrichtungen solche Fehlermeldungen aus Sicherheitsgründen immer parallel ab, d.h. eine Fehlermeldung wird gleichzeitig über mindestens zwei verschiedene physikalische Wege an die übergeordnete Steuerung gemeldet.

Eine solche Verfahrensweise ist z.B. aus dem Dokument EP-A-0 033 228 bekannt.

Durch die genannte Verfahrensweise wird jedoch die Bearbeitungskapazität der übergeordneten Steuerung für ein und dieselbe Information, nämlich eine Fehlermeldung, mehrmals in Anspruch genommen.

Die Aufgabe der Erfindung wird durch die Merkmale der Ansprüche 1 und 4 gelöst. Im folgenden wird ein Ausführungsbeispiel der Erfindung anhand der Zeichnung näher erläutert.

Durch die Erfindung wird ein rasches Melden von Ereignissen an die übergeordnete Steuerung gewährleistet, da alle Sendewege ausgenutzt werden und zum Senden eines Ereignisses immer der beste Sendeweg, d.h. der schnellste Sendeweg ausgewählt wird.

Das erfindungsgemäße Verfahren bewirkt außerdem eine automatische Lastanpassung, da nach dem erfindungsgemäßen Verfahren über solche Sendewege, die infolge höherer Last nicht so schnell mit einer Quittung antworten können, automatisch weniger Ereignismeldungen gesandt werden. Das erfindungsgemäße Verfahren funktioniert also auch dann, wenn ein Weg nicht mehr verfügbar ist bzw. ausfällt.

Eine Ausführungsform der Erfindung ist durch Anspruch 2 angegeben. Diese Ausgestaltung geht von einer Steuerungsstruktur aus, die außer der zentralen Steuerung auch zwischengelagerte Steuerungen umfaßt, die die Meldungen von der untergeordneten Steuerung ebenfalls zur Verarbeitung benötigen, und die jeweils im Sendeweg zwischen der untergeordneten Steuerung und der übergeordneten Steuerung liegen. Die Ausgestaltung erzielt bei der genannten Steuerungsstruktur zum einen eine schnellstmögliche redundanz freie Übermittlung der Meldungen an die übergeordnete Steuerung und gewährleistet außerdem die redundanz freie vollständige Übermittlung der Meldungen an jede der zwischengelagerten Steuerungen.

Eine weitere Ausführungsform der Erfindung ist durch Anspruch 3 angegeben. Durch diese Ausgestaltung kann bei Ausbleiben einer Quittung (Ablauf des Timers) die nicht quittierte Meldung über einen anderen Sendeweg gesandt werden. Außerdem kann das Ablaufen des Timers einer Überwachungseinrichtung gemeldet werden, die aufgrunddessen ein Prüfen des entsprechenden Sendewegs veranlaßt. Die zeitliche Länge des Timers kann großzügig bemessen sein, da eine weitere Meldung über denselben Sendeweg ja nur dann erfolgt, wenn vorher eine Quittung empfangen wurde.

Die Ausgestaltung der Datenstruktur als eine Kettenstruktur ermöglicht es, nachträgliche Ereignismeldungen dazuzuketten.

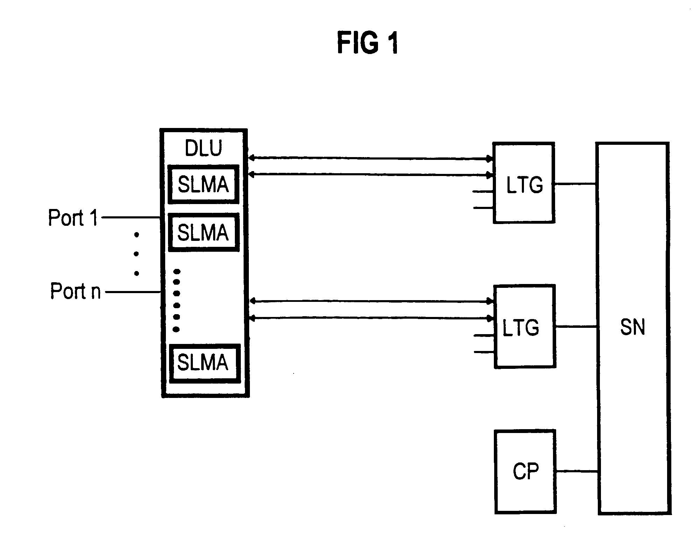

FIG 1 zeigt ein beispielhaftes Realzeitsystem, nämlich ein Vermittlungssystem, in dem das erfindungsgemäße Verfahren abläuft.

Im Mittelpunkt des dargestellten Vermittlungssystems steht ein zentrales Koppelnetz SN, an das mehrere Anschlußgruppen LTG, sowie ein Koordinationsprozessor CP angeschlossen sind.

Eine Anschlußgruppe LTG umfaßt jeweils einen Gruppenprozessor, der sie steuert und der außerdem Anteile der Call-Processing-Software enthält.

Der Koordinationsprozessor CP steuert das gesamte Vermittlungssystem und enthält insbesondere Anteile der Call-Processing-Software sowie der Operation- und Maintenance-Software.

An eine Anschlußgruppe LTG sind jeweils mehrere Teilnehmerleitungseinheiten DLU angeschlossen, die den Verkehr in Richtung der Anschlußgruppen LTG vorkonzentrieren.

Eine Teilnehmerleitungseinheit DLU beinhaltet mehrere Teilnehmermodule SLMA, die den Basisanschluß eines Teilnehmers an das Vermittlungssystem realisieren.

Registriert die Teilnehmerleitungseinheit nun Portfehlermeldungen von den Teilnehmermodulen SLMA, so müssen diese so schnell wie möglich an den Koordinationsprozessor gemeldet werden, damit dieser Belegungsversuche zu solchen gestörten Teilnehmerports so früh als möglich zurückweisen kann.

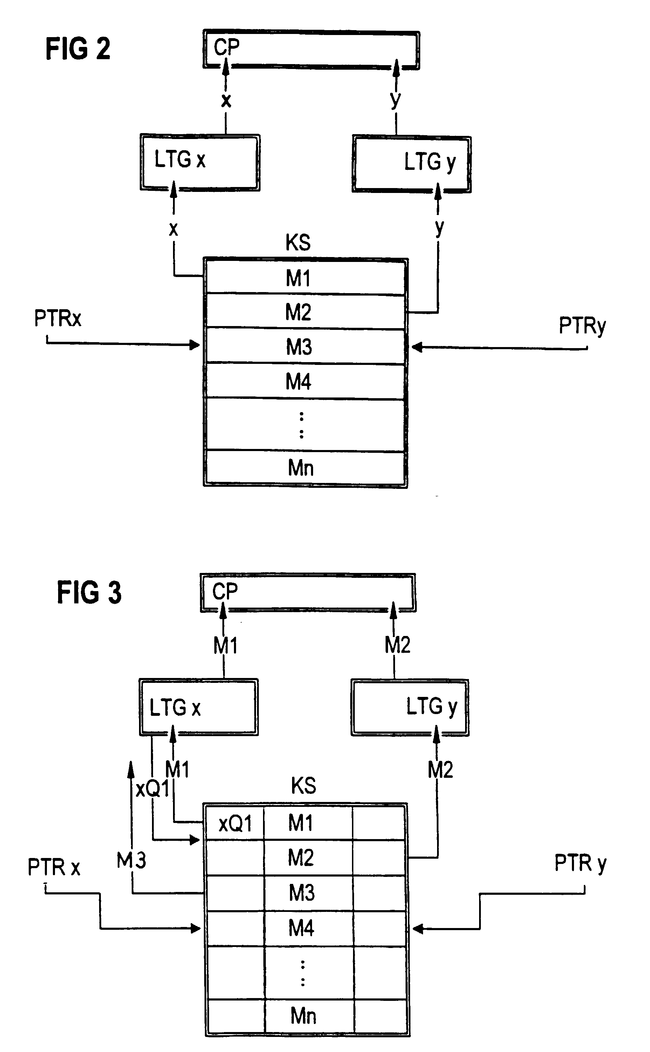

FIG 2 zeigt eine Einrichtung zur Aufnahme von Fehlermeldungen in einer peripheren Einrichtung, z.B. einer DLU, des obengenannten Vermittlungssystem.

Die Einrichtung umfaßt eine Kettenstruktur KS, die n Portfehlermeldungen aufnehmen kann, sowie Sendezeiger PTRx und PTRy, die auf das jeweils als nächstes zu sendende (Daten-)Element zeigen.

Im folgenden wird der mithilfe dieser Einrichtung realisierte Mechanismus zur Abarbeitung der Kettenstruktur und damit dem Senden von Fehlermeldungen näher beschrieben.

Zu Beginn der Abarbeitung zeigen beide Sendezeiger auf das Element 1. Die Abarbeitung beginnt sodann mit der Absetzung einer Meldung des Elements 1 zur x-Anschlußgruppe und der Erhöhung beider Sendezeiger auf das Element 2. Darüber hinaus wird ein Überwachungs-Timer gestartet, der die Zeit bis zum Empfang der Rückmeldung (Quittung) von der x-Anschlußgruppe überwacht.

Als nächstes wird über den Sendezeiger PTRy die Meldung M2 des Elements 2 abgesetzt, ein weiterer Timer gestartet und anschließend beide Sendezeiger wieder um ein Element erhöht. Damit ist die Initialisierung des Mechanismus abgeschlossen und beide Sendezeiger zeigen nunmehr auf das Element 3.

Die weitere Abarbeitung bzw. das weitere Senden von Fehlermeldungen erfolgt nun in Abhängigkeit von dem Eintreffen der Quittungen von den Anschlußgruppen. Trifft beispielsweise von der Anschlußgruppe LTGx für die Meldung M1 aus Element 1 die Quittung xQ1 ein, so wird dies im Element 1 entsprechend vermerkt. In diesem Fall wird zur weiteren Abarbeitung die nächste Meldung (hier Meldung M3), adressiert durch den PTRx, über den x-seitigen Weg, d.h. die x-LTG gesandt. Anschließend werden beide Sendezeiger wieder um ein Element inkrementiert. Dieser Fall ist in FIG 3 dargestellt.

Analog wird im anderen Fall, nämlich bei Empfang einer Quittung von der Anschlußgruppe LTGy, verfahren, d.h. es wird hier die Quittung yQ2 im entsprechenden Element vermerkt und, adressiert über den Sendezeiger PTRy, eine Meldung über die y-Seite, d.h. die Anschlußgruppe LTGy, zum Koordinationsprozessor abgesetzt.

Beim erfindungsgemaßen Verfahren wird also prinzipiell erst dann das nächste Element gesendet, wenn eine X-Quittung oder eine Y-Quittung voher empfangen wurde. Dabei wird nach dem Inkrementieren der beiden Sendezeiger das nächste Element über denjenigen Sendeweg gesendet, über den vorher die Quittung empfangen wurde. Abweichend von diesem Mechanismus werden zur Initialisierung des Verfahrens zunächst zwei aufeinanderfolgende Elemente X- und Y-seitig abgesandt, ohne vor dem Absenden des zweiten Elements auf die Quittung bezüglich des ersten Elements zu warten.

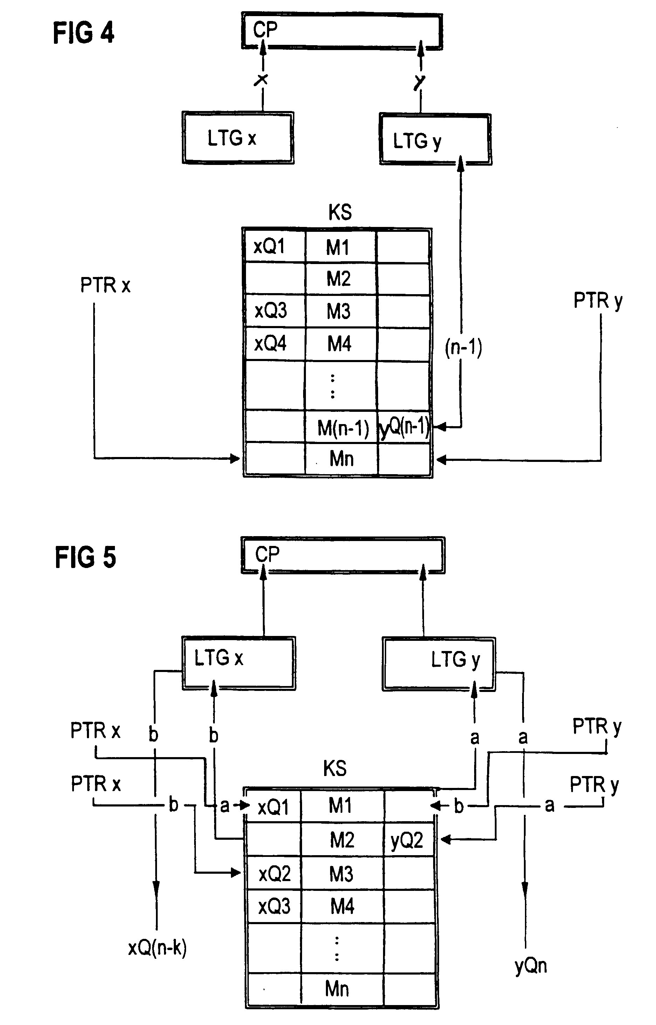

FIG 4 zeigt die Stellung der Sendezeiger am Ende des ersten Durchlaufs durch die KS. In FIG 4 ist davon ausgegangen, daß das Element (n-1) über die LTGy gesandt wurde.

Nach Aussenden des Elements (n-1) werden beide Sendezeiger auf das Element n gesetzt. Nach Erhalt des Quittungszeichens yQ (n-1) für das Element (n-1) wird die Meldung Mn, adressiert durch den Sendezeiger PTRy, über den y-seitigen Weg, d.h. die Anschlußgruppe LTGy, gesandt. Beide Sendezeiger werden sodann erneut auf das Element 1 gesetzt.

Der Erhalt der Quittung yQ (n-1) bedeutet im übrigen, daß y-seitig alle erwarteten Quittungen (mit Ausnahme der Quittung yQ(n)) bereits eingetroffen sind. Im Unterschied dazu kann x-seitig noch keine solche Aussage gemacht werden, d.h. x-seitig sind bisher nur Quittungen bis xQ (n-k) eingegangen, wobei k eine noch unbekannte ganze Zahl ist.

Da vor dem nun folgenden zweiten Durchlauf der Kettenstruktur vorausgesetzt wurde, daß das Element (n-1) bereits das Quittungszeichen yQ (n-1) erhalten hat, können im zweiten Durchlauf nunmehr zwei Fälle auftreten, nämlich ein Fall a, bei dem vor Beginn des zweiten Durchlaufs als letztes Quittungszeichen das Quittungszeichen yQn für die Meldung Mn empfangen wurde und ein Fall b, bei dem vor Beginn des zweiten Durchlaufs als letztes Quittungszeichen ein Quittungszeichen xQ für das Element (n - k) empfangen wurde, wobei im Fall b die Meldungen M (n-k+1) bis Mn über die y-Seite gesandt worden sein müssen.

FIG 5 zeigt die beiden vorher genannten Fälle a und b.

Im Fall a wird nach Empfang der Quittung yQn für die Meldung Mn als nächstes die Meldung M1 über den y-Weg gesendet. Beide Zeiger zeigen vor dem Senden der Meldung M1 zwar noch, vom ersten Durchlauf herrührend, auf dasselbe Element, nämlich auf Element 1, jedoch wurde x-seitig für die Meldung M1 schon im ersten Durchlauf eine Quittung empfangen, weshalb jetzt nurmehr der y-seitige Sendezeiger erhöht wird. Der Sendezeiger PTRx bleibt hingegen in diesem Fall bei Element 1.

Im Fall b wird bei Empfang der Quittung xQ (n-k) für die Meldung M (n-k) festgestellt, daß der x-seitige Sendezeiger auf ein Element zeigt, das schon gesendet wurde. In diesem Fall wird der x-seitige Sendezeiger so lange erhöht, bis ein x-seitig noch zu sendendes Element (Element ohne x-Quittung) gefunden wird. Der y-seitige Sendezeiger bleibt hingegen in diesem Fall bei Element 1.

Nach zwei Durchlaufen für die x- und y-Seite ist die Kettenstruktur somit vollständig abgearbeitet, falls keine neuen Elemente am Ende angereiht bzw. dazugekettet werden. Prinzipiell ist das Endekriterium für eine Seite also erfüllt, wenn während eines gesamten Durchlaufes kein Element mehr zu senden ist.

Die Anwendung der Erfindung ist selbstverständlich nicht auf zwei Sendewege x und y gemäß dem Ausführungsbeispiel beschränkt, sondern kann in analoger Weise auch auf mehr als zwei Sendewege angewandt werden. Desweiteren müssen auf den Sendewegen x und y nicht unbedingt, wie im Ausführungsbeispiel, zwischengelagerte Steuerungen LTGx und LTGy vorhanden sein, die ebenfalls mit sämtlichen Meldungen versorgt werden müssen, weshalb die Kettenstruktur KS im Rahmen des Sendeverfahrens bei dem Ausführungsbeispiel ein zweites Mal durchlaufen werden muß.

## Patentansprüche

1. Verfahren zum Senden von Meldungen von einer untergeordneten Steuerung an eine übergeordnete Steuerung, wobei zum Senden der Meldungen mehrere physikalische Sendewege vorhanden sind, demgemäß
a) zur Initialisierung über jeden Sendeweg zunächst eine Meldung ausgesendet wird, wobei es sich dabei um jeweils unterschiedliche Meldungen handelt,
b) jede von der übergeordneten Steuerung empfangene Meldung gegenüber der untergeordneten Steuerung quittiert wird, wobei die Quittung über denjenigen Sendeweg zurückgesendet wird, über den die Meldung empfangen wurde,
c) eine weitere Meldung immer dann gesendet wird, sobald eine Quittung über eine vorherige Meldung empfangen wird, wobei die weitere Meldung jeweils über denjenigen Sendeweg gesendet wird, über den die Quittung empfangen wurde.

2. Verfahren nach Anspruch 1,
**dadurch gekennzeichnet,** daß
a) die Meldungen über in den Sendewegen zwischengelagerte Steuerungen (LTG) an die übergeordnete Steuerung (CP) gesandt werden, die jeweils ebenfalls sämtliche Meldungen zur Bearbeitung benötigen,
b) jede von einer zwischengelagerte Steuerung empfangene Meldung gegenüber der untergeordneten Steuerung quittiert wird,
c) die Quittungen in der untergeordneten Steuerung (DLU) meldungs- und sendewegindividuell gespeichert werden,
d) nach dem erstmaligen Senden sämtliche Meldungen wenigstens ein weiteres Mal in Richtung übergeordnete Steuerung gesendet werden, wobei die zwischengelagerten Steuerungen diese Meldungen nicht mehr an die übergeordnete Steuerung weiterleiten und wobei in der untergeordneten Steuerung (DLU) anhand der gespeicherten Quittungen sichergestellt wird, daß eine von einer zwischengelagerte Steuerung bereits quittierte Meldung nicht erneut an diese gesendet wird.

3. Verfahren nach Anspruch 1 oder 2,
**dadurch gekennzeichnet,** daß
a) für jede ausgesendete Meldung durch einen Timer der Empfang einer entsprechenden Quittung überwacht wird,
b) eine Meldung, für die nach Ablauf des zugehörigen Timers keine Quittung erhalten wurde, nochmals auf einem anderen Sendeweg ausgesendet wird.

4. Sendeeinrichtung zum Senden von Meldungen von einer untergeordneten Steuerung an eine übergeordnete Steuerung, mit
a) einer Datenstruktur (KS), die Meldungen in der untergeordneten Steuerung zwischenspeichert, wobei die genannten Meldungen zum Senden an eine übergeordnete Steuerung über mehrere Sendewege bestimmt sind,
b) einem Zeiger pro Sendeweg, der jeweils auf die nächste zu sendende Meldung innerhalb der Datenstruktur (KS) zeigt, wozu der Zeiger nach dem Senden einer Meldung jeweils auf die nächste zu sendende Meldung gestellt wird,
c) einer Initialisierungsmethode, die das Senden der Meldungen initialisiert, indem sie zunächst über jeden Sendeweg eine Meldung sendet,
d) einer Sendemethode, die die durch den Zeiger festgelegte nächste zu sendende Meldung immer dann sendet, wenn eine Quittung für eine vorherige Meldung von der untergeordneten Steuerung empfangen worden ist, wobei diese nächste Meldung über denjenigen Sendeweg gesandt wird, über den die letzte Quittung empfangen worden ist.

5. Sendeeinrichtung nach Anspruch 4,
**dadurch gekennzeichnet,**
daß die genannte Datenstruktur (KS) als Kettenstruktur ausgebildet ist, wodurch ein Dazuketten von Meldungen in die Datenstruktur während des Sendens von Meldungen aus der Datenstruktur möglich ist.

## Claims

1. Method for sending messages from a lower-level controller to a higher-level controller, there being a plurality of physical transmission paths for sending the messages, according to which
a) a message is first of all transmitted, for initialization, via each transmission path, these being different messages in each case,
b) each message which is received by the higher-level controller is acknowledged to the lower-level controller, the acknowledgement being sent back via that transmission path via which the message was received,
c) a further message is always sent as soon as an acknowledgement of a previous message is received, the further message in each case being sent via that transmission path via which the acknowledgement was received.

2. Method according to Claim 1, characterized in that
a) the messages are sent via intermediate controllers (LTG) in the transmission paths to the higher-level controller (CP), each of which intermediate controllers (LTG) likewise requires all the messages for processing,
b) each message which is received by an intermediate controller is acknowledged to the lower-level controller,
c) the acknowledgements are stored in a message-specific and transmission-path-specific manner in the lower-level controller (DLU),
d) after they have been sent for the first time, all the messages are sent at least one further time in the direction of the higher-level controller, the intermediate controllers no longer passing these messages on to the higher-level controller, and the lower-level controller (DLU) using the stored acknowledgements to ensure that a message which has already been acknowledged by an intermediate controller is not sent to said intermediate controller again.

3. Method according to Claim 1 or 2, characterized in that,
a) for each transmitted message, receipt of a corresponding acknowledgement is monitored by a timer,
b) a message for which no acknowledgement has been received by the time the associated timer times out is transmitted once again on another transmission path.

4. Transmitting device for sending messages from a lower-level controller to a higher-level controller, having
a) a data structure (KS) which buffer-stores the messages in the lower-level controller, the said messages being intended to be sent to a higher-level controller via a plurality of transmission paths,
b) one pointer per transmission path which in each case points to the next message to be sent within the data structure (KS), for which purpose, after a message has been sent, the pointer is in each case moved to the next message to be sent,
c) an initialization method, which initializes the transmission of the messages in that it initially sends a message via each transmission path,
d) a transmission method which always sends that message which is defined by the pointer to be the next to be sent, whenever an acknowledgement for a previous message has been received by the lower-level controller, this next message being sent via that transmission path via which the last acknowledgement was received.

5. Transmitting device according to Claim 4,
characterized
in that the said data structure (KS) is designed as a chain structure, as a result of which it is possible to link messages into the data structure while messages are being sent from the data structure.

## Revendications

1. Procédé pour l'émission de messages d'une commande secondaire à une commande primaire, plusieurs voies d'émission physiques existant pour l'émission des messages, dans lequel
a) pour l'initialisation, on envoie d'abord un message par chaque voie d'émission, sachant qu'il s'agit alors à chaque fois de messages différents,
b) on accuse réception à la commande secondaire de chaque message reçu par la commande primaire, l'accusé de réception étant renvoyé par la voie d'émission par l'intermédiaire de laquelle le message a été reçu,
c) on émet toujours un autre message dès qu'un accusé de réception concernant un message précédent a été reçu, le nouveau message étant émis à chaque fois par la voie d'émission par l'intermédiaire de laquelle l'accusé de réception a été reçu.

2. Procédé selon la revendication 1,
caractérisé par le fait que
a) on émet les messages vers la commande primaire (CP) par l'intermédiaire de commandes (LTG) qui sont intercalées dans les voies d'émission et qui ont également besoin de tous les messages pour le traitement,
b) on accuse réception à la commande secondaire de chaque message reçu par une commande intermédiaire,
c) on mémorise les accusés de réception individuellement, pour chaque message et pour chaque voie d'émission, dans la commande secondaire (DLU),
d) après la première émission, on émet tous les messages au moins une autre fois en direction de la commande primaire, les commandes intermédiaires ne retransmettant plus ces messages vers la commande primaire et, dans la commande secondaire (DLU), les accusés de réception mémorisés permettant d'assurer qu'un message dont une commande intermédiaire a déjà accusé réception n'est pas émis de nouveau vers celle-ci.

3. Procédé selon la revendication 1 ou 2,
caractérisé par le fait que
a) pour chaque message émis, la réception d'un accusé de réception correspondant est contrôlée par un temporisateur,
b) un message pour lequel, après l'expiration du délai du temporisateur associé, aucun accusé de réception n'a été reçu, est émis encore une fois sur une autre voie d'émission.

4. Dispositif d'émission pour l'émission de messages d'une commande secondaire à une commande primaire, comprenant
a) une structure de données (KS) qui mémorise des messages dans la commande secondaire, lesdits messages étant destinés à l'émission vers une commande primaire par l'intermédiaire de plusieurs voies d'émission,
b) un pointeur par voie d'émission, lequel pointeur indique à chaque fois à l'intérieur de la structure de données (KS) le prochain message à émettre, le pointeur étant placé à chaque fois, après l'émission d'un message, sur le prochain message à émettre,
c) une méthode d'initialisation qui initialise l'émission des messages en émettant d'abord un message par l'intermédiaire de chaque voie d'émission,
d) une méthode d'émission qui émet toujours le prochain message à émettre indiqué par le pointeur lorsqu'un accusé de réception pour un message précédent a été reçu par la commande secondaire, ce prochain message étant émis par la voie d'émission par l'intermédiaire de laquelle le dernier accusé de réception a été reçu.

5. Dispositif d'émission selon la revendication 4,
caractérisé par le fait que
ladite structure de données (KS) est conçue comme une structure chaînée, un ajout par chaînage de messages dans la structure de données étant possible pendant l'émission de messages provenant de la structure de données.
